# EUROPEAN PATENT SPECIFICATION

(11) **EP 0 645 172 B1**
(45) Date of publication and mention of the grant of the patent: **19.03.2003**
(21) Application number: 94306997.1
(22) Date of filing: 26.09.1994
(51) Int. Cl.: B01D 53/70, A62D 3/00, B01J 21/02, B01J 23/89, B01D 53/86

(54) **Method and catalyst for treating exhaust gases containing dioxines**
Methode und Katalysator zur Behandlung von Dioxinen enthaltenden Rauchgasen
Méthode et catalyseur pour le traitement des effluents gazeux contenant des dioxines

(30) Priority: 24.09.1993 JP 26172393
(43) Date of publication of application: 29.03.1995
(73) Proprietor: N.E. CHEMCAT CORPORATION, Minato-ku, Tokyo (JP); NKK CORPORATION, Tokyo (JP)
(72) Inventor: Sakurai, Toshihiko, Kunitachi-shi, Tokyo (JP); Iwasaki, Toshihiko, Bunkyo-ku, Tokyo (JP); Shibuya, Eiichi, Shinagawa-ku, Tokyo (JP)
(74) Representative: Jones, Helen Marjorie Meredith

(56) References cited:
- EP-A- 0 402 122
- EP-A- 0 470 659
- EP-A- 0 485 787
- EP-A- 0 488 331
- EP-A- 0 493 803
- EP-A- 0 499 644
- EP-A- 0 547 226
- WO-A-91/13130
- WO-A-91/17828
- GB-A- 1 485 375
- US-A- 4 566 267
- US-A- 4 795 732

## Description

The present invention relates to a catalyst for the elimination of dioxines in exhaust gases, a production process for this novel catalyst and a method of treating exhaust gases to eliminate dioxines using the catalyst. The catalyst acts by oxidatively decomposing to reduce polychlorobenzo-para-dioxines and polychlorobenzo-furans.

Exhaust gases generated, for example, from incineration facilities for disposing of industrial wastes and municipal wastes, steel making plants and metal refining industries contain a slight amount of toxic organic chloro compounds such as dioxines, PCB and chlorophenol in addition to toxic substances such as SOₓ NOₓ, HCl and cyan, and a technique for removing them has now been under development with view points of human health and environmental protection.

The substances referred to as dioxines are compounds of polychlorodibenzo-para-dioxines (PCDDs) and polychlorodibenzofurans (PCDFs) and include from dichlorides to octachlorides depending on the number of chlorine atoms and their isomers include as many as 75 kinds for PCDDs and 135 kinds for PCDFs. Among them, tetrachlorodibenzo dioxines (T₄CDDs) are known as the most toxic substance. Further, since dioxines are highly stable water insoluble substances and their toxicity is substantially permanent, they are considered to be the most significant chemical substance that causes environmental pollution, being coupled with their strong toxicity.

It is known that dioxines are formed by reaction of unburnt residual carbon, oxygen and chlorides (such as metal chlorides) in exhaust gases and that they are formed in a certain temperature range from organic chlorine compounds such as chlorobenzenes and chlorophenols. These are present in exhaust gases discharged from incinerators as precursors and the dioxines are formed therefrom under the catalytic effects of various elements in fly ashes in incineration plants. However, all of discharged compounds are effects of the fly ashes present together in the exhaust gases and it has not yet been reported that the dioxines are formed by the effect of catalysts disposed in facilities for treating the exhaust gases.

In the present specification, various substances contained in the exhaust gases to be treated and having a possibility of being converted into dioxines are collectively referred to as precursors for the dioxines.

A guideline regarding the operation of incineration plants was issued from the Ministry of Health and Welfare of Japan (referred to herein as "Ministry of Health and Welfare") in December, 1990 in which it is requested that in subsequently installed incineration plants the gas temperature at the inlet of a dust collector be lowered to less than 200°C, so that the concentration of dioxines in existent gases is reduced to less than 0.5 ng/Nm³ (converted as the international toxicity equivalent concentration). It is also required that existent incineration plants are operated such that the gas temperature at the inlet of the dust collector is as low as possible within a range from 250 to 280°C, so that the concentration of the dioxines is reduced to less than 1/10 of the usual concentration.

On the other hand, in order to reduce organic chlorine compounds (as the precursor for the dioxines) in incineration plants, it is considered most important to conduct sufficient combustion in incineration plants. For instance, in modern municipal waste incineration plants, reduction of the dioxines in the exhaust gases has been advanced considerably by the mode of combustion and it is now possible to reduce the concentration to less than several tens ng/Nm³ converted as the international toxicity equivalent concentration. The International Toxicity Equivalency Factor (I-TEF) is described by Kutz, F. W. *et* *al* in "The International Toxicity Equivalency Factor (I-TEF) Method of Risk Assessment for Complex Mixtures of Dioxins and Related Compounds", Chemosphere 20(7-9), 751-757 (1990). However, there is a limit on the reduction which can be achieved by this combustion technique and it is sometimes impossible to maintain the concentration of the dioxines in the exhaust gases at the outlet to less than the 0.5 ng/Nm³ (converted as the international toxicity equivalent concentration) specified by the guideline of the Ministry of Health and Welfare concerning the operation of incineration plants.

In view of the above, it is now necessary to provide a system for eliminating toxic organic chlorine compounds, including the dioxines, in the exhaust gases downstream of incinerators.

As a potential elimination system, the following two systems are those which have mainly been studied in recent years. One of them is an adsorption elimination system of eliminating by adsorption using an adsorption layer. This layer may be made for example of activated carbon. The second is an elimination system by decomposition on a catalyst. For the latter system, there is proposed, for example, a system of decomposing to eliminate dioxines together with NOₓ by passing the gases through a fixed bed type denitrating honeycomb catalyst layer. There has also been proposed an eliminating system of fixed bed type oxidative decomposition by passing the gases through a denitrating catalyst layer and a platinum group element-titania type honeycomb catalyst.

As the catalyst, a denitrating catalyst comprising vanadium pentoxide, tungsten oxide and titania, or a catalyst carrying a platinum group element on the denitrating catalyst has been disclosed, for example, in International Application WO-A-92.19366 and JP-A-2.035.914. Further, JP-A-3.008.415 discloses, as the method of treating exhaust gases, an oxidative eliminating technique of eliminating toxic organic chlorine compounds such as polychlorobenzo dioxines and polychlorodibenzo furans contained, for example, in exhaust gases from incineration plants, using a catalyst at a working temperature higher than 250°C. JP-A-4.118.027 discloses a similar method of treating exhaust gases at 150 - 350°C, and JP-A-5.154.345 discloses an active filter element using an oxide catalyst selected from the group consisting of elements having element numbers of 23 to 30, as well as W and Mo.

However, in the adsorption elimination system, the space velocity has to be lowered since the concentration of the material to be treated is extremely low. This makes the apparatus huge. There is additionally a problem regarding regeneration of activated carbon wastes and waste disposal. Furthermore, the systems used involve various problems, as follow:
(1) Since gases leaving a dust collector at the inlet temperature of the dust collector requested by the guideline of the Ministry of Health and Welfare are at low temperature, oxidation activity is insufficient, which results in a poor purification ratio.
(2) It has been found that as the concentration of dioxines in exhaust gases to be treated is lowered to less than several ng/Nm³ (converted as the international toxicity equivalent concentration), elimination of the dioxines already present in the gases becomes difficult depending on the treating temperature and the catalyst ingredient used for the treatment and, in addition, dioxines are newly formed in the gases by the catalytic effect, so that the concentration of the dioxines is sometimes higher in the outlet gases than the concentration of the dioxines in the inlet gases.
(3) The catalysts disclosed in International Patent Application WO-A-92.19366 and JP-A-2.035.914, involve a drawback that dioxines are newly formed from dioxines precursors, which are present at a concentration about several thousands times as high as that of dioxines. This is by a catalytic effect in a low temperature region of lower than 280°C, particularly, lower than 250°C. The result is that the concentration of dioxines in the outlet gases is higher than the concentration of dioxines in the inlet gases. The catalyst also has poor durability at a low temperature to substances such as HCl, SOₓ, Hg vapour and organic chlorine compounds which act as a catalyst poison. The catalyst therefore fails to maintain a high activity for a long time.
(4) Further, there is also a problem with the elimination technique, for example, practical working life has not yet been confirmed.
(5) JP-A-3.008.415 can not be considered as a commercially viable technique for treating exhaust gases at a temperature, possibly, lower than 250°C, incapable of satisfying the above-mentioned Ministry of Health and Welfare guideline.
(6) JP-A-4.118.027 and JP-A-5.154.345 involve a practical problem since they give no consideration to the fact that the elimination effect is lowered or even an adverse effect will result if the concentration of the dioxines is in the range of less than 10 ng/Nm³ (converted as the international toxicity equivalent concentration) at a temperature of lower than 280°C, particularly, lower than 250°C as described above. No data is given relating to the catalyst life. It has not yet been possible to use the system described as a practical technique.

It is an object of the present invention to provide a catalyst for treating exhaust gases which have been generated from burning disposal of various kinds of industrial wastes, and which contain precursors of dioxines such as chlorobenzene and chlorophenol together with HCl, exhaust gases from metal refining and exhaust gases from chemical plants containing organic chlorine compounds, which can decompose to produce dioxines already present in the exhaust gases. The invention aims to treat these gases while suppressing formation of dioxines from precursors in the catalyst layer at a low treating temperature, in accordance with the guideline of the Ministry of Health and Welfare, thereby reducing the concentration of dioxines in outlet gases to less than 0.5 ng/Nm³, desirably, less than 0.1 ng/Nm³ (converted as the international toxicity equivalent concentration) which is an aimed value.

The invention aims to provide a production process for the catalyst and a exhaust gas treating method.

The present inventors have made a study for solving the foregoing problems and attaining the objects described above and, as a result, have accomplished the present invention based on the finding that the object can be attained by supporting a predetermined active ingredient in a predetermined amount on a predetermined carrier.

In EP-A-0493803 catalysts are described which may be used *inter alia* for treatment of exhaust gases containing combustible gases. The catalyst comprises a composite oxide powder of 4 to 19% silica, 3 to 10% boria and the balance alumina, and Pd in an amount 3 to 100g per litre of powder.

In US-A-4,665,267, US-A-4,795,732 and WO-A-9113130 catalysts for dehydrogenating alkanes or for catalytic reforming or dehydrocyclization of hydrocarbons are described. The catalysts comprise zeolites with a high Si:Al ratio and small amounts of Pt, Pd or Ir.

In WO-A-9117828 describes zeolite-carrying metal catalysts for oxidation of halogenated organics. The zeolites are first metal exchanged then impregnated with a further metal. No combinations of first and second catalyst component required by the present claims are specifically disclosed.

EP-A-0,485,787 describes metal modified catalysts for treatment of exhaust gases. No combinations of composite oxide or zeolite and metal catalyst as required by the claims of the present application are disclosed.

The first aspect of the present invention resides in a catalyst for treating exhaust gases containing dioxines comprising at least one component selected from the group consisting of Pt, Pd and Ir and oxides thereof as a first catalyst ingredient, and at least one component selected from the group consisting of Au, Ag, Cu, Fe, Sb, Se, Te and Ta and oxides thereof as a second catalyst ingredient, supported in an amount of 0.1 to 10 g per litre of catalyst of the first catalyst ingredient and 0.01 to 5 g per litre of catalyst of the second catalyst ingredient, on at least one component selected from the group consisting of silica-boria-alumina composite oxides and zeolites with a silica-to-alumina molar ratio of more than 30, and at a support ratio by weight of the second ingredient to the first ingredient of the catalyst of less than 1.

A second aspect of the present invention resides in a process for producing a catalyst for treating exhaust gases containing dioxines, which comprises spraying or dripping a homogeneous mixed solution or homogeneous liquid dispersion of a raw material for the first catalyst ingredient or the first catalyst ingredient and the second catalyst ingredient onto powder of at least one component selected from silica-boria-alumina composite oxides and (where the catalyst is part of the second aspect) zeolites with a silica-to-alumina molar ratio of more than 30 during stirring thereby supporting the catalyst ingredient, and then slurrying and depositing them on a carrier substrate.

A third aspect of the present invention resides in-a process for producing a catalyst for treating exhaust gases containing dioxines, which comprises slurrying at least one of powders of a silica-boria-alumina composite oxide and (where the catalyst is part of the second aspect) a zeolite with a silica-to-alumina molar ratio of more than 30, coating the slurry on the surface of a carrier substrate, drying and baking to complete deposition, subjecting the coated carrier substrate to immersion, spraying, liquid absorption or ion exchange with the solution of a raw material for the first catalyst ingredient, or the first catalyst ingredient and the second catalyst ingredient successively or simultaneously, and then drying and baking thereby carrying the catalyst ingredient.

A fourth aspect of the present invention resides in a method of treating exhaust gases, which comprises bringing exhaust gases containing HCl and containing dioxines at a concentration of less than 10 ng/Nm³ (converted as the international toxicity equivalent concentration) at a treating temperature within range from 150°C to 280°C into contact with a catalyst comprising at least one component selected from the group consisting of Pt, Pd and Ir and oxides thereof, supported as a catalyst ingredient on at least one component selected from the group consisting of silica-boria-alumina composite oxides and zeolites with a silica-to-alumina molar ratio of more than 30, and deposited on a carrier substrate. This method is operated so that oxidative decomposition takes place to eliminate dioxines contained in the exhaust gases while suppressing additional formation of dioxines from precursors for dioxines present in the exhaust gases.

A sixth aspect of the present invention resides in a method of treating exhaust gases, which comprises bringing exhaust gases containing HCl and containing dioxines at a concentration of less than 10 ng/Nm³ (converted as the international toxicity equivalent Concentration) at a treating temperature within a range from 150°C to 280°C into contact with a catalyst comprising at least one component selected from the group consisting of Pt, Pd and Ir and oxides thereof as a first catalyst ingredient and at least one component selected from the group consisting of Au, Ag, Cu, Fe, Sb, Se, Te and Ta and oxides thereof as a second catalyst ingredient, supported on at least one component selected from the group consisting of silica-boria-alumina composite oxides and zeolite with a silica-to-alumina molar ratio of more than 30 and deposited on a carrier substrate. This method is operated so that oxidative decomposition takes place to eliminate dioxines contained in the exhaust gases while suppressing additional formation of dioxines from precursors for dioxines present in the exhaust gases.

The catalyst according to the present invention comprises a surface coating ingredient and a catalyst ingredient, and the surface coating ingredient comprises a silica-boria-alumina composite oxide or a zeolite with a silica-to-alumina molar ratio of more than 30.

The carrier substrate for the catalyst may be in any of optional shapes such as spherical, pelletised, extruded, plateaus, cylindrical or lattice-like shape. It may be a support having an integral structure or filter-like configuration. Where dust is contained in a large amounts in exhaust gases such as from incineration plants, a carrier which is a support having the integral structure or a filter may preferably be used.

The catalyst is a two-component catalyst comprising the first catalyst ingredient selected from the group consisting of elements of Pt, Pd and Ir and oxides thereof and the second catalyst ingredient selected from the group consisting of the elements of Au, Ag, Cu, Fe, Sb, Se, Te, Ta and oxides thereof. Further, a catalyst comprising at least one of elements selected from the group consisting of Pt, Pd and Ir and oxides thereof supported on a specified surface coating ingredient can also provide such characteristics.

In a case of depositing the catalyst ingredient on a carrier substrate such as a support having an integral structure, the concentration of the first catalyst ingredient is preferably from 0.1 to 10 g per one litre volume of a complete catalyst, the concentration of the second catalyst ingredient is preferably from 0.01 to 5 g per one litre of the completed catalyst, and the weight ratio of the second catalyst ingredient to the first catalyst ingredient is less than 1. Further, in a case of coating the catalyst on the surface of the filtration material for a bag filter, the first catalyst ingredient is at least one component selected from the group consisting of Pt, Pd and Ir and oxides thereof and is carried in an amount from 0.05 to 5% by weight based on the weight of the filtration material for a complete bag filter. The second catalyst ingredient, if present, comprises at least one component selected from the group consisting of Au, Ag, Cu, Fe, Sb, Se, Te and Ta and oxides thereof and is carried in an amount from 0.01 to 1% by weight based on the weight of the filtration material of a complete bag filter. The weight ratio of the second catalyst ingredient to the first catalyst ingredient is preferably not more than 1. The range for the concentration of the catalyst ingredient of the catalyst using only the first catalyst ingredient is usually from 0.1 to 10 g based on one litre volume of the complete catalyst in a case of depositing on the carrier substrate such as a support having an integral structure, while the concentration of the catalyst ingredient in the case of coating the catalyst on the surface of the filtration material for a bag filter is preferably from 0.05 to 5% by weight.

The catalyst according to the present invention can be prepared, for example, by
(a) a method of spraying or dripping a homogeneous mixed solution or homogeneous liquid dispersion of a raw material for the first catalyst ingredient and, if required, the second catalyst ingredient into at least one of powders of silica-boria-alumina composite oxide and zeolite with a silica-to-alumina molar ratio of more than 30 while stirring, drying, preferably at a temperature from 50 to 200°C, and then calcining or baking them, preferably at a temperature from 200 to 600°C thereby supporting the catalyst ingredient.
or (b) a method of slurrying at least one of powders of a silica-boria-alumina composite oxide and zeolite with a silica-to-alumina molar ratio of more than 30, coating the slurry on the surface of a carrier substrate such as a support having an integral structure or a filtration material for a bag filter, drying, preferably at a temperature from 100 to 200°C, baking, preferably at a temperature from 200 to 800°C, to complete deposition, and subjecting the carrier substrate to immersion or liquid absorption with solutions of raw materials for the first catalyst ingredient and the second catalyst ingredient, successively, or simultaneously with a homogeneous mixed solution of raw materials for the first catalyst ingredient and if required the second catalyst ingredient, usually at a temperature ranging from a room temperature to 98°C. Alternatively this last stage may include carrying the catalyst ingredients through ion exchange to a carrier substrate coated with for instance a zeolite powder with a silica-to-alumina molar ratio of more than 30, drying, usually at a temperature within a range from a room temperature to 200°C, and then calcining, preferably at a temperature within a range from 200 to 600°C, thereby completing the carriage of the catalyst ingredient.
or (c) a method of immersing or mixing a silica-boria-alumina composite oxide or zeolite with a silica-to-alumina molar ratio of more than 30 in a homogeneous mixed solution or homogeneous liquid dispersion of the raw materials for the first catalyst ingredient and the second catalyst ingredient, filtering and cleaning and then slurrying them and coating on a carrier substrate such as a support having an integral structure or a filtration material for a bag filter, drying, preferably at a temperature from 50 to 200°C, and then calcining or baking, preferably at a temperature from 200 to 800°C, thereby carrying the catalyst ingredient. Also useable is a method of immersing at least one zeolite with a silica-to-alumina molar ratio of more than 30 in a homogeneously mixed solution of raw materials for the first catalyst ingredient and the second catalyst ingredient, carrying the catalyst ingredient through ion exchange in the liquid, filtering, cleaning and slurrying them and coating on a carrier substrate such as a support having an integral structure or a filtration material for a bag filter, drying, preferably at a temperature from 50 to 200°C, and then calcining or baking, preferably at a temperature from 200 to 600°C, thereby forming a catalyst.

As an example for the method of coating the catalyst on a carrier substrate such as a support having an integral structure or a filtration material for a bag filter, there is a method of coating the carrier substrate with a catalyst slurry in which the first catalyst ingredient and the second catalyst ingredient are carried on at least one of powders of a silica-boria-alumina composite oxide and a zeolite with a silica-to-alumina molar ratio of more than 30. Referring more specifically to the coating method, the powdery catalyst is generally introduced together with purified water and an acid into a ball mill and slurried by pulverization to a grain size of the mixture of 0.1 to 10 µm. The acid used may be a usual mineral acid or organic acid, acetic acid being particularly preferred and may be used in an amount of 20 to 100 ml per 1 kg of the coating layer solid content comprising at least one of powdery catalysts of a silica-boria-alumina composite oxide and a zeolite. The resultant slurry is incorporated with purified water to adjust to a predetermined specific gravity, for example, a slurry of 1.20 - 1.60 g/ml. Subsequently, a carrier substrate is dipped into the slurry for 5 to 60 sec, taken out, removed with excess slurry an with air stream or the like, dried at 100 - 200°C and then calcined at a temperature from 200 to 600°C to complete coating. The amount deposited after the completion of the coating per one litre of the carrier substrate is from 30 to 160 g although varying depending on the number of cells and structure of the carrier substrate.

The catalyst according to the present invention can be produced also by an electroless plating method. A process for producing a catalyst by an electroless plating method is carried out by preparing a slurry in the same manner as described previously by using a zeolite with a silica-to-alumina molar ratio of more than 30, coating the slurry on a support having an integral structure, drying and calcining the same to complete deposition of a surface coating ingredient, immersing and keeping them in an electroless plating solution containing a first catalyst ingredient comprising at least one of elements selected from the group consisting of Pt, Pd and Ir at a temperature from 30 to 80°C for about 30 hours thereby precipitating a predetermined amount of the first catalyst ingredient and then applying water washing and drying, to complete the catalyst. A process for producing a two-component catalyst by an electroless plating method is carried out, in a similar manner, by immersing and keeping a support having an integral structure having a surface coating ingredient deposited thereon into an electroless plating solution of a catalyst ingredient comprising at least one of elements selected from Au and Ag, thereby depositing a predetermined amount of the second catalyst ingredient, washing and drying the same and then immersing and keeping them again in an electroless plating solution of a first catalyst ingredient and depositing a predetermined amount of the first catalyst ingredient and then applying water washing to complete the catalyst.

For the method of treating exhaust gases using the catalyst according to the present invention, the treating temperature is an important factor from a practical view point and the temperature is from 150 to 280°C. When treatment is carried out by depositing the catalyst on a filtration material for a bag filter material, the treatment is preferably conducted at a temperature from 150 to 230°C in view of the limited temperature for the material used for the filtration material.

The oxygen concentration in gases to be treated may be 1% by volume or greater, and the catalyst carried on a support having an integral structure and the filtration material with catalyst for a bag filter are used in a filling amount that gases passed at such a space velocity (Sv) and linear velocity that the concentration of dioxines in exhaust gases at a treating temperature is maintained to less than 0.5 ng/Nm³, desirably, to less than 0.1 ng/Nm³ converted as international toxicity equivalent concentration as international aimed value.

Dioxines as an object to be eliminated in exhaust gases are present in the order of ng/Nm³, while organic chlorine compounds and organic compounds as precursors for dioxines are present in the order of µg/Nm³, both of which are extremely small amounts. Since their concentration is so low, detailed reaction mechanisms have not yet been apparent. It will be supposed that various reactions participate in a complicate manner on the surface of the catalyst, such as complete oxidative reaction, oxidative dehydrogenating reaction, dechlorinating reaction, isomerizing reaction, disproportionationing reaction.

It has been reported, for example, to the complete oxidative reaction that dioxines are decomposed into water, carbon dioxide, hydrogen chloride, and to the dichlorinating reaction that dioxines are formed by polycondensation from two molecules of 2,4,5-trichlorophneol or alkali salts thereof.

As the elimination method, elimination by complete oxidation is most preferred but dechlorinating reaction may be used in which chlorine is removed from dioxine skeletons or aromatic rings are disconnected to be partially oxidized into less or no toxic molecules.

Existent catalysts, particularly, catalysts containing oxides such as V, W and Ce involve drawbacks that they are more liable to be converted into chlorides as compared with noble metal catalysts in exhaust gases containing HCl, give less decomposing activity such as oxidation activity and dechlorination activity at a low temperature to substances such as dioxines having relatively large molecular weight and high boiling point, and tend to cause isomerizing activity or polymerizing activity. As an concrete example, there is a result for the measurement of inlet and outlet gases to a catalyst layer in a elimination test by oxidization for exhaust gases from municipal waste incineration plants shown in Tables 3 and 6 to be described later. It is apparent that, among dioxines in the outlet gases, hexa or higher chlorides of PCDDs and PCDFs are rather increased and dioxines of strong toxicity are formed from compounds which are not dioxines by chlorination or polymerization of precursors.

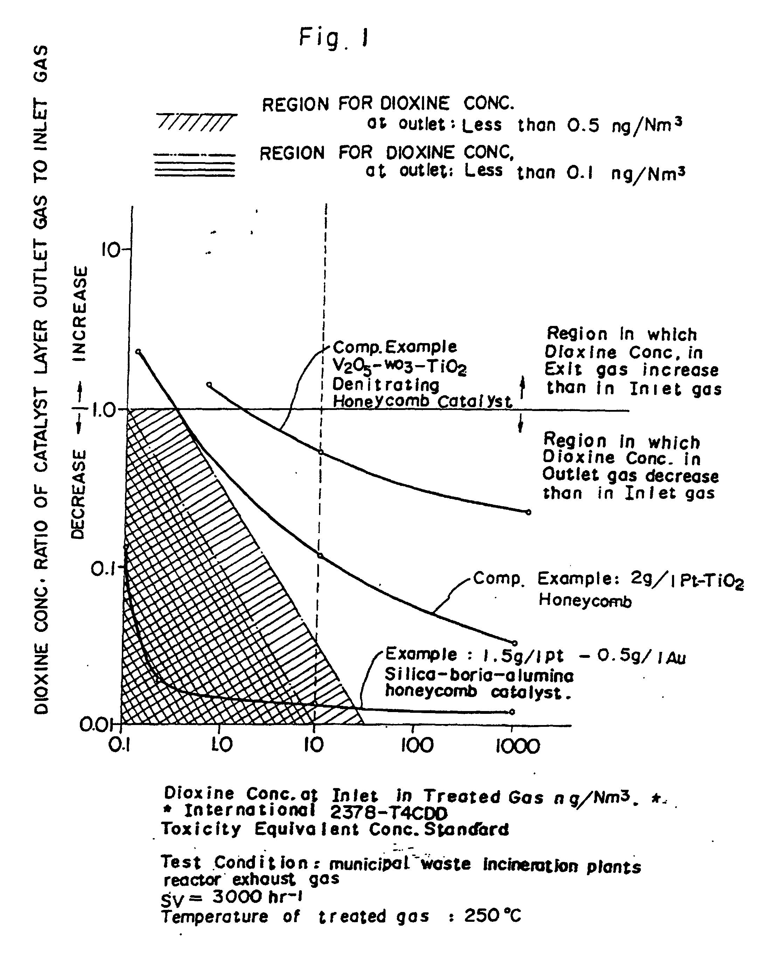

Fig. 1 shows a relationship between the concentration of dioxines in inlet gases (on abscissa) and a ratio of concentration of dioxines at the outlet to the concentration of dioxines at the inlet (on ordinate) in a case of conducting an elimination test by oxidative decomposition of exhaust gases from municipal waste incineration plants by using a conventional catalyst and a catalyst according to the present invention deposited on a commercially available cordierite. It can be seen that elimination by oxidative decomposition of exhaust gases containing dioxines at a relatively low concentration is insufficient and dioxines increase in the catalyst layer depending on the level of dioxines concentration in the prior art catalyst. That is, it is necessary for the catalyst to have a characteristic of progressing the decomposing reaction of dioxines present in exhaust gases even at a low temperature and not progressing (suppressing) the reaction of forming dioxines from the precursors, that is, a selectivity of showing a high decomposing activity at a low temperature and retaining the nature of forming dioxines from precursors for dioxines contained in the exhaust gases as less as possible. The selectivity is more important as the concentration of dioxines is lower and it is a feature necessary for the case of requiring a high purification ratio.

A catalyst containing only the first catalyst ingredient using a specified surface coating ingredient or a catalyst comprising two component by further adding the second catalyst ingredient according to the present invention has such necessary characteristic. An example, catalysts comprising such catalyst ingredients deposited on commercially available cordierite honeycombs are shown in Example 2 and Table 4 to be described later. It can be seen that the catalysts eliminate dioxines in the exhaust gases together with PCDDs and PCDFs with no substantial relation to the structure of reactants and, as a result, show excellent oxidative decomposing activity at low temperature.

The support having the integral structure is a honeycomb structure or a three-dimensional network structure.

They comprise cordierite (2SiO₂-2Al₂O₃-5MgO), mullite (2SiO₂-3Al₂O₃), silica-boria-alumina composite oxide (honeycomb exclusion product from a powder sintered at 1000°C for more than 3 hours), ceramics such as α-alumina, alumina titanate, spodumene and magnesium, honeycomb or formed product made of activated carbon or carbon graphite-or acid-resistant metal such as iron-based alloy, nickel based alloy, chromium-based alloy or copper-based alloy having excellent mechanical and physical strength. Since they have no substantial surface area or pores by themselves, they can not carry the catalyst. Accordingly, it is preferred to use them by depositing, on the surface thereof, an acid resistant surface coating ingredient, or an acid resistant surface coating ingredient carrying the catalyst ingredient, having a large surface area. Among them, a honeycomb structure comprising cordierite is inexpensive and most preferred.

The number of cells in the honeycomb structure or the three-dimensional network structure is preferably from 10 to 400 cells per one square inch (1.55 to 62.00 per cm²). If the number of cells is less than 10, a size of unit cell is so large that contact of reactants in the gases to be treated is poor and they are left as they are in a state reacted only insufficiently. On the other hand, if the number of the cells exceeds 400, through holes are tend to be clogged due to powdery dusts. For exhaust gases containing powdery dusts in a relatively large amount as exhaust gases from an incineration plant, a support having an integral structure with a number of cells per one square inch of less than 100 (less than 15.50 per cm²) is used from a practical point of view. There is no particular restriction on the filtration material for a bag filter and materials generally available in the market such as glass fibres, teflon type felts or polyamide fibres are preferred.

The silica-boria-alumina composite oxide preferably comprises from 4 to 20% by weight of silica (SiO₂), from 3 to 10% by weight of boria (B₂O₃) and the balance of alumina (Al₂O₃) (SiO₂ + B₂O₃ + Al₂O₃ = 100% by weight) as converted into oxides, which is not a mere mixture of silica, boria and alumina but formed as a so-called ternary composite oxide which can provide a unique physical property.

Zeolite with a silica-to-alumina molar ratio of more than 30 is preferably ZSM-5, mordenite or ultra-stable Y-type (USY) zeolite of a relatively high acid resistance, particularly, a ultra-high stable Y-type zeolite with a silica-to-alumina molar ratio of more than 50. The ultra-stable Y-type zeolite is a stabilized Y-zeolite obtained by applying an acid treatment to zeolite to leach out Al₂O₃ and it develops a preferred characteristic by forming a binary composite oxide. The zeolite may be synthesized or commercially available zeolite may be used. Alternatively, metasilicate obtained by substituting transition metals the zeolite may also be used.

The silica-boria-alumina composite oxide, and the zeolite with a silica-to-alumina molar ratio of more than 30 are so-called solid acid having a remarkable acidity not found in each of individual constituent oxides and have a large surface area such as more than 300 m²/g as the BET specific surface area. The silica-boria-alumina composite oxide and the zeolite with a silica-to-alumina molar ratio of more than 30 are preferably used by previously calcinins at a temperature from 700 to 1200°C for to 12 hours, preferably, at a temperature from 700 to 1000°C for three hours in an atmospheric air thereby further improving the acid resistance.

The silica-boria-alumina composite oxide is obtained, for example, by forming an alumina hydrate slurry by hydrolysis of an aqueous solution of aluminum sulphate and an aqueous solution of sodium aluminate, adding an aqueous solution of sodium silicate to obtain a slurry of alumina-silica hydrate, which is then filtered and washed to form an alumina-silica hydrate cake, adding and sufficiently mixing an aqueous solution of ortho-boric acid in such an amount as providing a predetermined amount of boria, spray-drying the thus obtained alumina-silica-boron mixed hydrate and then calcining them at a temperature from 600 to 800°C and pulverizing into an average grain size of about 25 µm. Although this may be used as it is, the alumina-silicaboron mixed hydrate is kneaded under heating in a kneader with a heating jacket, extrusion moulded from a moulding machine having a dice of a desired shape, then dried at a temperature from 80 to 120°C, calcined at a temperature from 600 - 1100°C and then pulverized into a powder for use.

For preparing a mordenite ultra stable type Y type zeolite with a silica-to-alumina molar ratio of more than 30, an Si source can be selected from inorganic silicon compounds such as colloidal silica, water glass, silicon tetrachloride and silica gel, as well as organic silicon compounds such as tetraethyl silicate. Although the raw materials may contain a trace amount of impurities or inclusions, they result in no problem unless they give a significant effect on the resultant physical property. Mordenite can be synthesized, for example, by a method of adding a small amount of boehmite type alumina powder to a mixed liquid of sodium silicate and purified water, to which diluted sulphuric acid is added and stirred sufficiently, adding an aqueous solution of tetraethyl ammonium bromide (TEABr), further stirring and then maintained in an autoclave at 170°C for about 85 hours. Subsequently, the synthesized product is filtered and washed and then dried at 120°C over one night. The molar ratio of silica to alumina is controlled by the amount of sodium silicate and alumina used. Further, the ultra-stable Y-type zeolite is produced, for example, by adding sodium silicate to an aqueous solution of sodium aluminate in sodium hydroxide and aged for three hours, to which sodium silicate is admixed, again adding an aqueous solution of sodium aluminate in sodium hydroxide to the mixed solution, further mixing, dropping 50% concentrated sulphuric acid, stirring sufficiently, stirring and maintaining under heating at 150°C for 24 hours in an autoclave to synthesize zeolite, filtering and then washing the same at 120°C for drying. The resultant zeolite is refluxed in an aqueous solution of 1 N HCl for 80 hours and refluxed to leach alumina and then filtered and cleaned again. The molar ratio of silica to alumina is controlled depending on the amount of sodium silicate and sodium aluminate used.

As the raw material for the first catalyst ingredient, particles of elements, oxides and hydroxides of Pt, Pd and Ir are used. In addition, there are also used, for example, chloroplatinic acid, alkali chloroplatinate, ammonium chloroplatinate and amine platinum chloride as Pt salts. Palladium nitrate, palladium chloride, chloro palladic acid, alkali chloropalladate, ammonium chloropalladate and amine palladium chloride as Pd salts and chloro iridic acid, alkali iridate, ammonium iridate and amine iridium chloride as Ir salts. As the raw material for the second catalyst ingredient, particles of elements, oxides or hydroxides of Au, Ag, Cu, Fe, Sb, Se, Te and Ta are used. In addition, there are also used, for example, chlroauric acid, alkali chloroaurate or potassium cyanoaurate as Au salts, silver nitrate, silver fluoride, silver cyanate or silver perchlorate as Ag salts. For example, copper nitrate, copper chloride and copper sulphate as Cu salts, iron nitrate, iron halide and iron sulphate as Fe salts, Sb salt, for example, antimony halide, Se salt, for example, selenium oxide and selenium halide, Te salt, for example, telluric acid and tellurium halide, Ta salt, for example, alkali tantalate. Further, as the raw materials for them, their organic salts collectively referred to as resinates or resinoids dissolved in organic solvents such as terepin oil can also be used.

If the concentration of the first catalyst ingredient is lower than the above specified range (0.1 to 10 g per litre catalyst), the low temperature activity may be lost. On the other hand, if the concentration is higher than the above specified range it can be economically inadvantageous. If the concentration of the second catalyst ingredient is lower than the above specified range (0.1 to 5 g per litre catalyst), the selectivity can be lowered, while the decomposing activity can be lowered if the concentration is higher.

The catalyst carrying the first catalyst ingredient may be used after a reducing treatment. The reducing treatment includes a wet reducing method and a dry reducing method. As the wet reducing method, a customary reducing method using an aqueous solution, for example, of formalin, hydrazine, oxalic acid or sodium borohydride (SBH) at a temperature from 10 to 95°C may be used. The dry reducing method is conducted by using a reducing gas such as a hydrogen gas or carbon monoxide or such a reducing gas diluted with nitrogen at a temperature from 150 to 600°C, preferably, 200 to 500°C. Further, it is preferred to settle the element by the reducing treatment and then remove insoluble residual impurities by water washing for the improvement of the low temperature activity.

In the gas system to be treated, a step of diffusing and adsorbing reactants to the surface of the catalyst is important since the reactants are contained in an extremely small amount. Therefore, it is effective for such a countermeasure of providing unevenness to a contact surface between the gas and the surface to result in disturbance thereby breaking wall film. Then, granular or acicular substance is added by 1 to 20% by weight based on the deposition layer solid content to the coating layer at the surface. Specifically, they are granules or pulverizates of silica-boria-alumina composite oxide, zeolite, titania, zirconia, silica, alumina, activated carbon and carbon graphite, and acicular substance such as whiskers of aluminum titanate, potassium titanate and SiC, glass fibres, alumina fibres, alumina-silica fibres, activated carbon fibres and carbon graphite fibres. Addition of the acid resistant fibrous material increases the adhesion of the coating layer and it is advantageous, particularly, in a case of using a filter by coating the catalyst ingredient.

In the case of using the added slurry of granular or acicular material, the slurry is added after formation by from 1 to 20% by weight based on the dry solid content of the coating layer and then uniformly mixed by a stirrer. The granular or the acicular material itself may also be used by being formed into a catalyst in the same manner as described previously.

In the treating method according to the present invention, the treating temperature is as described above. Operation can be conducted along with the guideline of the Ministry of the Health and Welfare by restricting the upper limit of the treating temperature for the exhaust gases to 280°C as described above. If it is lower than 150°C, the elimination effect is poor and, in addition, hindrance of adsorption to the object to be eliminated is undesirably increased due to adsorption of steams, HCl or SOₓ present together in the exhaust gases.

For the size of the filling catalyst, the cross section or the length can be determined while taking a place to be installed into consideration. The facility utilizing the treating method of the present invention can naturally be applied for denitration by the catalyst according to the present invention and it can be used alone. However, in a case of using the denitrating device together in the exhaust gas treatment, it is advantageous to install the facility to the downstream of the denitrating catalyst layer relative to the gas stream to betreated.

There is no particular restriction as described above on the type of the reactor employed and usual reactors such as a fixed bed or moving bed reactor can be applied. In a case of exhaust gas treatment for incineration plants, since exhaust gases contain a great amount of dusts and have a high possibility of clogging, use of a reactor having a honeycomb catalyst capable of easily adjusting openings depending on the amount of the dusts is preferred.

As described above, the catalyst according to the present invention has various advantages as described below (1) it less suffers from HCl poisoning in the decomposing reaction and can maintain a high activity at a low temperature, (2) has a high selective activity of suppressing a reaction of forming dioxines from precursors in gases in which the precursors for dioxines are present together, while decomposing dioxines present initially and it particularly, shows a high elimination rate of dioxines in a case where the concentration of dioxines in gases to be treated is at a relatively low level of less than 1 ng/Nm³ converted as the international toxicity equivalent Concentration and (3) suppressing the oxidizing activity of converting coexistent SOₓ into SO₃ and NH3 into NOₓ and (4) has a long practical working life.
Fig. 1 is a graph illustrating comparison between the concentration of dioxines in exhaust gases at the inlet and the purifying performance for each of the catalysts;
Fig. 2 is a schematic view of an experimental device for treatment of exhaust gases.
Fig. 3 is a perspective view illustrating a structure of a honeycomb-shaped catalyst-packed unit;
Fig. 4 is an outer view illustrating an example of a catalyst reaction column; and
Fig. 5 is a flow chart of treatment of exhaust gases illustrating an example attached to a municipal waste incineration plant.
Fig. 6 is a graph showing results of long life Test using catalyst 1-1 in municipal waste incineration plant reactor exhaust gas.

Figure 1 illustrates comparison between the purifying performance of a catalyst according to the invention and conventional catalysts according to the prior art. The graph is self-explanatory.

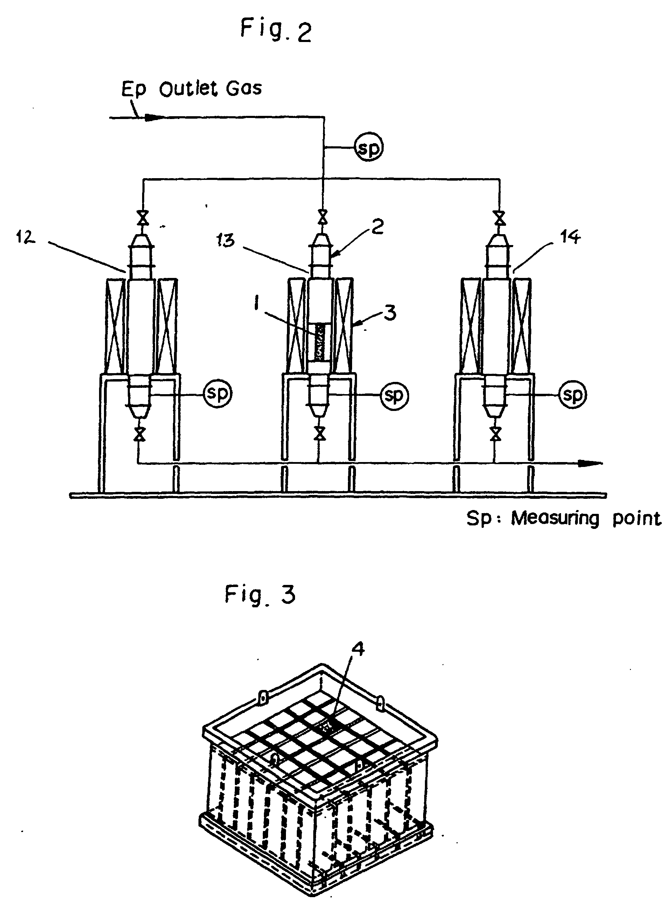

Figure 2 shows a schematic view of a laboratory device for treatment of exhaust gases. Exhaust outlet gases travel along the line Ep and through one or more of the devices 12, 13 and 14, each of which contains catalyst according to the invention. The outlet gases are treated in the devices 12, 13 and 14 to remove dioxines. Measurement of dioxine levels is carried out at the points "sp" so that comparison between inlet and outlet levels may be made.

Figure 3 is a perspective view illustrating an example of the structure of a honeycomb-shaped unit packed with catalyst according to the invention.

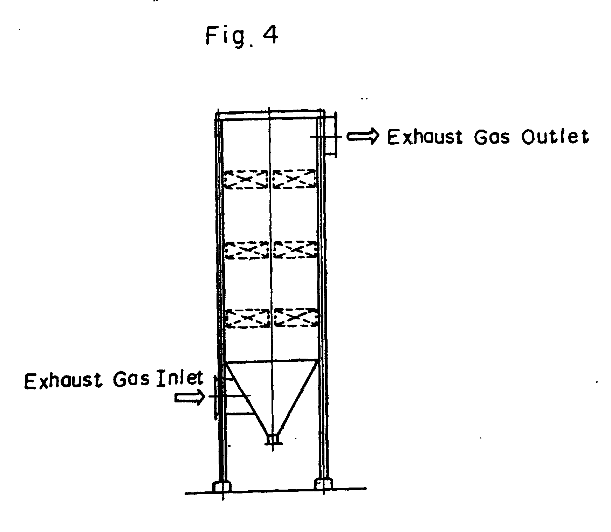

Figure 4 gives a diagrammatic representation of a single catalyst reaction column, showing how the exhaust gases may pass in through the inlet, up through the catalyst beds and out through the gas outlet.

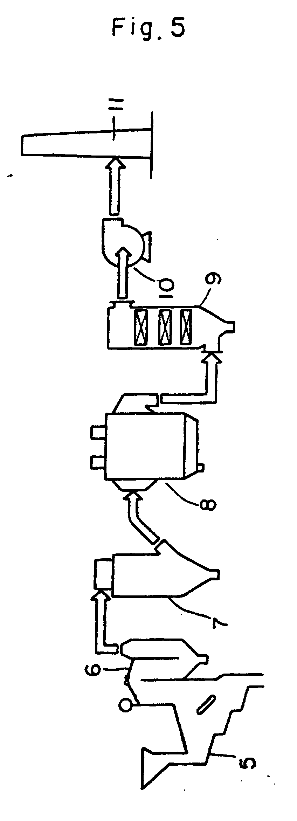

Figure 5 shows a flow chart of the treatment of exhaust gases emitted from a municipal waste incineration plant. After leaving the waste incineration plant the gases may pass through one or more of a furnace, which may be a Stoker furnace, and a cooling system, which may be a boiler type cooling system. The gases may also be pretreated by semi-dry noxious gas removing treatment and/or passage through an electric dust precipitator.

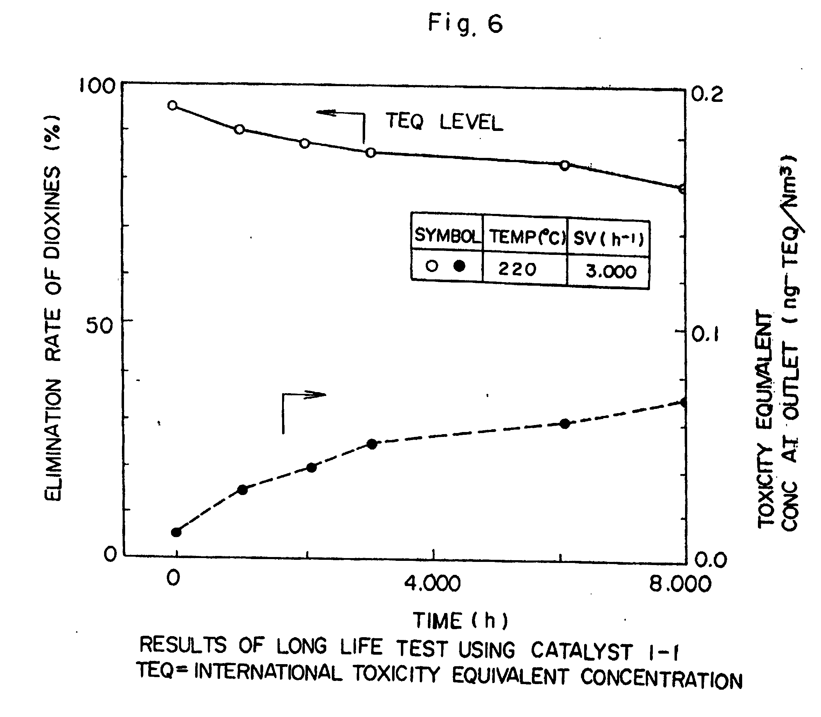

Figure 6 shows graphically the results of a longlife test using catalyst 1-1 on municipal waste incineration exhaust gase. The graph is self-explanatory.

Description will now be given of examples of the present invention.

### Example 1

100 ml of a mixed aqueous solution of chloroplatinic acid (H₂PtCl₆) containing Pt at a predetermined concentration and a chloroauric acid (HAuCl₄) containing Au at a predetermined concentration was added to, while stirring, 270 g of a silica-boria-alumina composite oxide powder with an average grain size of 15 µm comprising 10% by weight of silica, 5% by weight of boria and the balance of alumina being converted as oxide, dried at 110°C for 12 hours, calcined at 500°C for three hours in an air atmosphere to prepare a powdery catalyst comprising a silica-boria-alumina composite oxide of 2.5 wt% Pt - 0.83 wt% Au. 280 g of the catalyst, 420 ml of purified water and 10 ml of acetic acid were pulverized in a ball mill for 6 hours into average grain size of 5 µm. Further, a small amount of purified water was added into the resultant slurry to adjust a specific gravity to 1.32 g/ml, in which a commercially available cordierite honeycomb having a number of cells of 30 cpi² (cells per square inch) (4.65 cells per cm²) and a volume of 307 ml with a cross section of 32 mm x 32 mm and a length of 300 mm was immersed for 10 sec. Then, the honeycomb was taken out, removed with excess slurry by an air stream, dried at 100°C for 12 hours in an electric drier, baked at 500°C for one hour in an air atmosphere to obtain a honeycomb catalyst 1-1 with a solid deposition of 60 g/l and carrying Pt at 1.5 g/1 litre catalyst and Au at 0.5 g/1 litre catalyst.

Using the thus obtained catalyst 1-1, an elimination test by oxidative decomposition was conducted for polychlorodibenzo dioxines (PCDDs) and polychlorodibenzo furans (PCDFs) in exhaust gases from municipal waste incineration plants under the conditions shown in Table 1 described below.

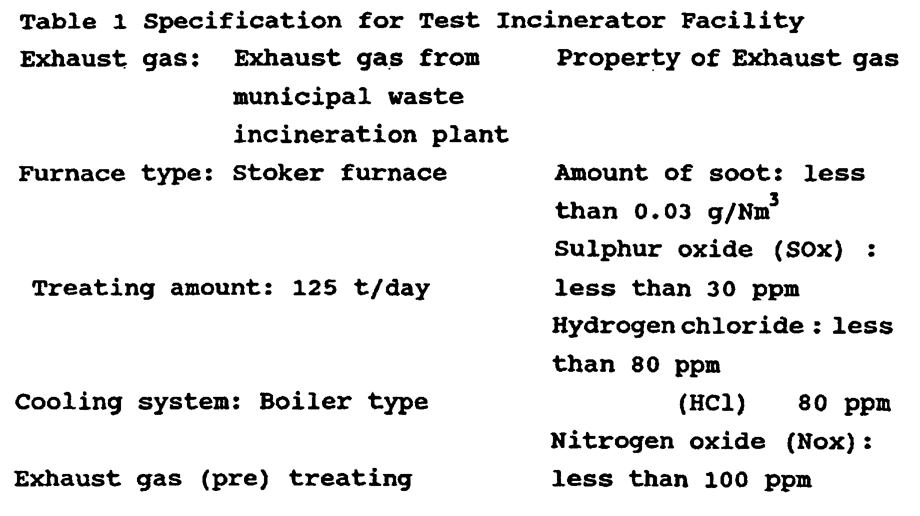

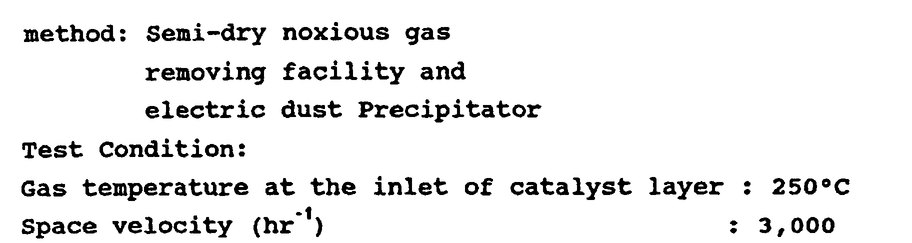

The results are shown in Tables 2 and 4.

### Example 2

In the same procedures as those in Example 1, a silica-boria-alumina composite oxide (comprising 10% silica, 5% boria and the balance of alumina) carrying two ingredients of Pt and Ag, by using chloroplatinic acid (H₂PtCl₆) for Pt and silver nitrate (AgNO₃) for Ag in the second catalyst ingredient, was deposited on a cordierite honeycomb substrate with a number of cells of 30 cpi², (4.65 cells per cm²) to obtain a honeycomb catalyst 1-2 carrying Pt at 1.5 g/1 litre catalyst and Ag at 0.5 g/l litre catalyst. An elimination test by oxidative decomposition was carried out for the resultant catalyst 1-2 in the same manner as in Example 1, and results are shown in Table 2.

### Example 3

In the same procedures as those in Example 1, a silica-boria-alumina composite oxide (comprising 10% silica, 5% boria and the balance of alumina) carrying two ingredients of Pt and Te, by using chloroplatinic acid (H₂PtCl₆) for Pt and Telluric acid (H₆TeO₆) for Te in the second catalyst ingredient was deposited on a cordierite honeycomb substrate with a number of cells of 30 cpi², (4.65 cells per cm²) to obtain a honeycomb catalyst 1-3 carrying Pt at 1.5 g/l litre catalyst and Te at 0.5 g/l litre catalyst. An elimination test by oxidative decomposition was carried out for the resultant catalyst 1-3 in the same manner as in Example 1, and results are shown in Table 2.

### Example 4

In the same procedures as those in Example 1, a silica-boria-alumina composite oxide (comprising 10% silica, 5% boria and the balance of alumina) carrying only Pt was deposited on using only a cordierite honeycomb substrate with a number of cells of 30 cpi² (4.65 cells per cm²), to obtain a honeycomb catalyst 1-4 carrying Pt at 2.0 g/1 litre catalyst. An elimination test by oxidative decomposition was carried out for the resultant catalyst 1-4 in the same manner as in Example 1, and results are shown in Tables 2 and 4.

### Example 5

In the same procedures as those in Example 1, a commercially available USY zeolite (silica/alumina molar ratio 80, calcined at 800°C for three hours) carrying two ingredients of Pt and Au was deposited to a cordierite honeycomb substrate with a number of cells of 30 cpi², (4.65 cells per cm²) to obtain a honeycomb catalyst 1-5 carrying Pt at 1.5 g/1 litre catalyst and Au at 0.5 g/l litre catalyst. An elimination test by oxidative decomposition was carried out for the resultant catalyst 1-5 in the same manner as in Example 1, and results are shown in Table 2.

### Example 6

In the same procedures as those in Example 1, a commercially available USY zeolite (silica/alumina molar ratio 80, calcined at 800°C for three hours) carrying Pt at 1.5 g/1 litre catalyst and Au at 0.5 g/1 litre catalyst was deposited by an electroless plating method on a cordierite honeycomb substrate with a number of cells of 30 cpi², (4.65 cells per cm²) to obtain a honeycomb catalyst 1-6. An elimination test by oxidization of oxidative decomposition was carried out for the resultant catalyst 1-6 in the same manner as in Example 1, and results are shown in Table 2.

### Example 7

In the similar procedures to those in Example 1, 8.33% by weight of Pd and 1.67% by weight of Ag were carried to a cordierite honeycomb substrate with number of cells of 30 cpi² (4.65 cells per cm²) by using palladium nitrate (Pd(NO₃)₂) for Pd and silver nitrate (AgNO₃) for Ag to prepare a silica-boria-alumina composite oxide, and a slurry was prepared in the same manner as in Example 1 by using the catalyst, and depositing the slurry to obtain a honeycomb catalyst 2-1 carrying Pd at 5 g/1 litre catalyst and Ag at 1 g/1 litre catalyst. Using the catalyst 2-1, an elimination test by oxidative decomposition was carried out in the same manner as in Example 1 and results are shown in Table 2 and 4.

### Example 8

In the same procedures as those in Example 7, a silica-boria-alumina composite oxide (silica 10%, boria 5%, and the balance of alumina) carrying two ingredients of Pd and Au by using palladium nitrate (Pd(NO₃)₂) for Pd and chloroauric acid (HAuCl₄) for the Au as the second catalyst ingredient was deposited to a cordierite honeycomb substrate having number of cells of 30 cpi² (4.65 cells per cm²) to obtain a honeycomb catalyst 2-2 carrying Pd at 5.0 g/1 litre catalyst and Au at 1.0 g/1 litre catalyst. An elimination test by oxidative decomposition was conducted in the same manner as in Example 1 for the resultant catalyst 2-2, and results are shown in Table 2.

### Example 9

In the same procedures as those in Example 1, a silica-boria-alumina composite oxide (silica 10%, boria 5%, and the balance of alumina) carrying two ingredients of Pd and Te using palladium nitrate (Pd(NO₃)₂) for Pd and telluric acid (H₆TeO₆) for the Te as the second catalyst ingredient was deposited to a cordierite honeycomb substrate having number of cells of 30 cpi² (4.65 cells per cm²) to obtain a honeycomb catalyst 2-3 carrying Pd at 5.0 g/1 litre catalyst and Te at 1.0 g/1 litre catalyst. An elimination test was conducted by oxidative decomposition in the same manner as in Example 1 for the resultant catalyst 2-3, and results are shown in Table 2.

### Example 10

In the same procedures as those in Example 7, a silica-boria-alumina composite oxide (10% silica, 5% boria and the balance of alumina) carrying Pd by using palladium nitrate Pd(NO₃)₂ was deposited on a cordierite honeycomb substrate with a number of cells of 30 cpi² (4.65 cells per cm²), to obtain a honeycomb catalyst 2-4 carrying Pd at 7.0 g/1 litre catalyst. An elimination test was conducted by oxidative decomposition in the same manner as in Example 1 for the resultant catalyst 2-4, and results are shown in Table 2.

### Example 11

In the same procedures as those in Example 1, a silica-boria-alumina composite oxide (silica 10%, boria 5%, and the balance of alumina) carrying two ingredients of Ir and Au using iridium chloride (IrCl₃) for Ir and chloroauric acid (HAuCl₄) for Au as the second catalyst ingredient was deposited to a cordierite honeycomb substrate having number of cells of 30 cpi² (4.65 cells per cm²), to obtain a honeycomb catalyst 3-1 carrying Ir at 3.0 g/1 litre catalyst and Au at 1.0 g/1 litre catalyst. An elimination test was conducted by oxidative decomposition in the same manner as in Example 1 for the resultant catalyst 3-1, and results are shown in Table 2.

### Example 12

In the same procedures as those in Example 1, a silica-boria-alumina composite oxide (silica 10%, boria 5%, and the balance of alumina) carrying two ingredients of Ir and Ag using iridium chloride (IrCl₃) for Ir and silver nitrate (AgNO₃) for the Ag as the second catalyst ingredient was deposited to a cordierite honeycomb substrate having number of cells of 30 cpi² (4.65 cells per cm²), to obtain a honeycomb catalyst 3-2 carrying Ir at 3.0 g/l litre catalyst and Ag at 1.0 g/1 litre catalyst. An elimination test was conducted by oxidative decomposition in the same manner as in Example 1 for the resultant catalyst 3-2, and results are shown in Table 2.

### Example 13

In the same procedures as those in Example 1, a silica-boria-alumina composite oxide slurry containing Pt and Au was deposited thinly on the surface of a filtration material for a bag filter, dried at 100°C and calcined at 200°C to obtain a filter material specimen with catalyst for a bag filter. An elimination test was carried out by oxidative decomposition in the same manner as in Example 1 for the resultant specimen. Substantially the same results as those in Example 1 were obtained.

### Example 14

An elimination test by oxidative decomposition was carried out using the honeycomb catalyst sample No. 1-1 of Example 1 carrying Pt at 1.5 g/1 litre catalyst and Au at 0.5 g/1 litre catalyst under the exhaust gas test conditions shown in Table 1 while lowering the gas temperature at the inlet of the catalyst layer to 220°C and the results are shown in Table 5.

### Comparative Example 1

An elimination test by oxidative decomposition was carried out in the same manner as in Example 1 by using a commercially available denitrating honeycomb catalyst 4 comprising V₂O₅-WO₃-TiO₂ prepared by kneading a TiO₂ powder with a solution of V salt and W salt, mixing a binder, extruding them into a honeycomb shape with number of cells of 35 cpi² (5.43 cells per cm²) (corresponding to hole diameter 3.5 mm), into V₂O₅ and WO₃, and results are shown in Tables 3 and 6.

### Comparative Example 2

A honeycomb catalyst 5 was obtained by carrying Pt at 2 g/1 litre catalyst to the catalyst 4 obtained in Comparative Example 1. An elimination test by oxidative decomposition was carried out in the same manner as in Example 1 for the resultant catalyst 5 and results are shown in Tables 3 and 6.

### Comparative Example 3

An elimination test by oxidative decomposition was carried out in the same procedures as those in Example 1 for removing dioxines by oxidative decomposition together with denitration by using a denitrating honeycomb catalyst 6 carrying Pt at 2 g/1 litre catalyst in the same manner as the catalyst 5 obtained in Comparative Example 2 and adding gaseous ammonia (NH3/NOₓ = 0.8 or greater). Results are shown in Tables 3 and 6. The denitrating ratio was 81.5%

### Comparative Example 4

A honeycomb catalyst 7 was prepared by carrying Pd at 5 g/1 litre to the denitrating catalyst obtained in Comparative Example 1. An elimination test by oxidative decomposition was carried out in the same manner as in Example 1 for the resultant catalyst 7 and the results are shown in Table 3.

### Comparative Example 5

A honeycomb catalyst 8 carrying Ce at 4 g/1 litre catalyst on a commercially available titania honeycomb carrier with a number of cells of 36 cpi² (5.58 cells per cm²) (corresponding to 4 mm pore size) was obtained. An elimination test by oxidizing or oxidative decomposition was carried out for the resultant catalyst 8 in the same manner as in Example 1 and the results are shown in Table 3.

### Comparative Example 6

A honeycomb catalyst 9 carrying Pt at 2.5 g/1 litre catalyst on a mullite laminate type honeycomb coated with a commercially available titania with a cell opening of 36 cpi² (5.58 cells per cm²) was obtained. An elimination test by oxidative decomposition was carried out for the resultant catalyst 9 and results are shown in Table 3.

**Table 2**

| | |
|---|---|
| The honeycomb is a cordierite with a number of cells 30 cell/inch square (4.65 per cm²). | |
| The results are at the concentration of dioxines at the inlet in the gas to be treated of 10 ng/Nm³ converted as international toxicity equivalent concentration. | |

| Gas temperature at the inlet of catalyst layer: 250°C Space velocity (hr⁻¹) : 3,000 | |
|---|---|
| Specimen No. | Elimination rate for dioxines ( % ) |
| 1-1 | 97 |
| 1-2 | 95 |
| 1-3 | 97 |
| 1-4 | 84 |
| 1-5 | 95 |
| 1-6 | 75 |
| 2-1 | 78 |
| 2-2 | 90 |
| 2-3 | 80 |
| 2-4 | 75 |
| 3-1 | 77 |
| 3-2 | 70 |

**Table 3**

| Specimen No. | State of concentration of dioxines in outlet gases |
|---|---|
| 4 | increased from the inlet |
| 5 | increased from the inlet |
| 6 | increased from the inlet |
| 7 | increased from the inlet |
| 8 | increased from the inlet |
| 9 | showing 38% elimination ratio |

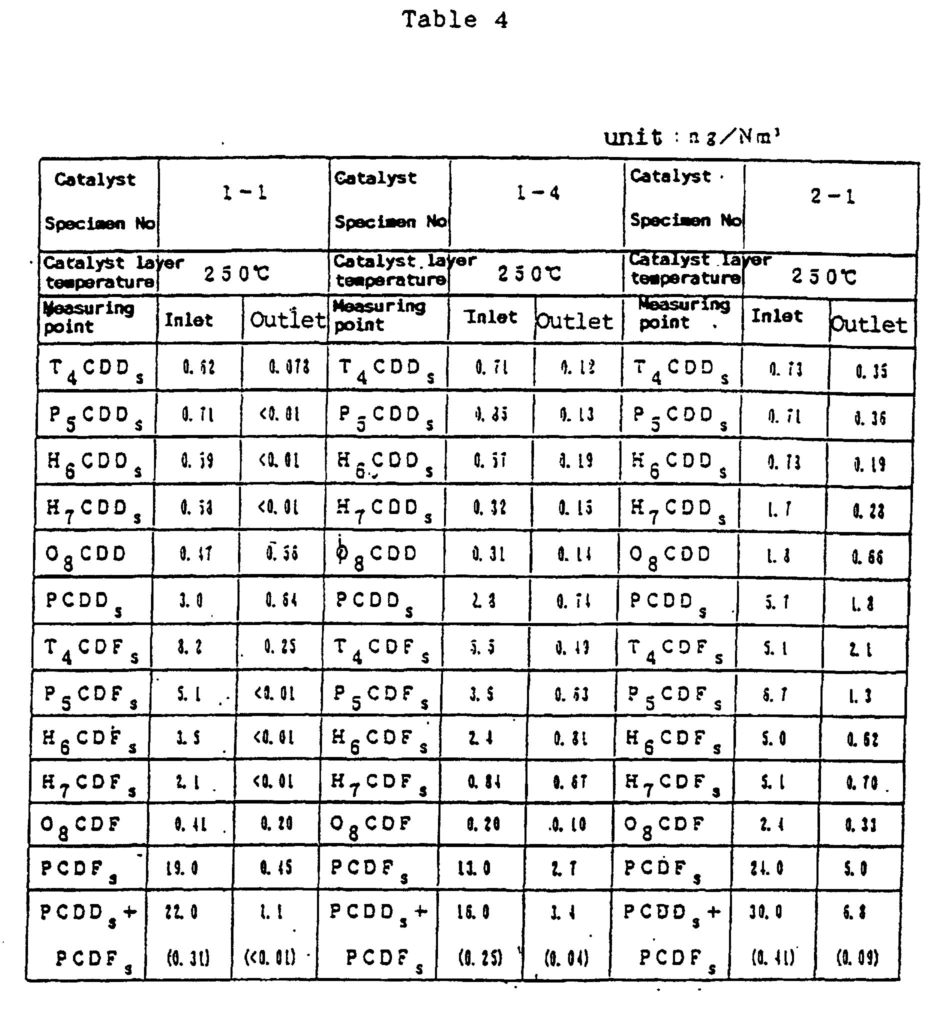

Concentration: O₂ concentration converted as 12%
Numericals shown in () represent international toxicity equivalent concentration

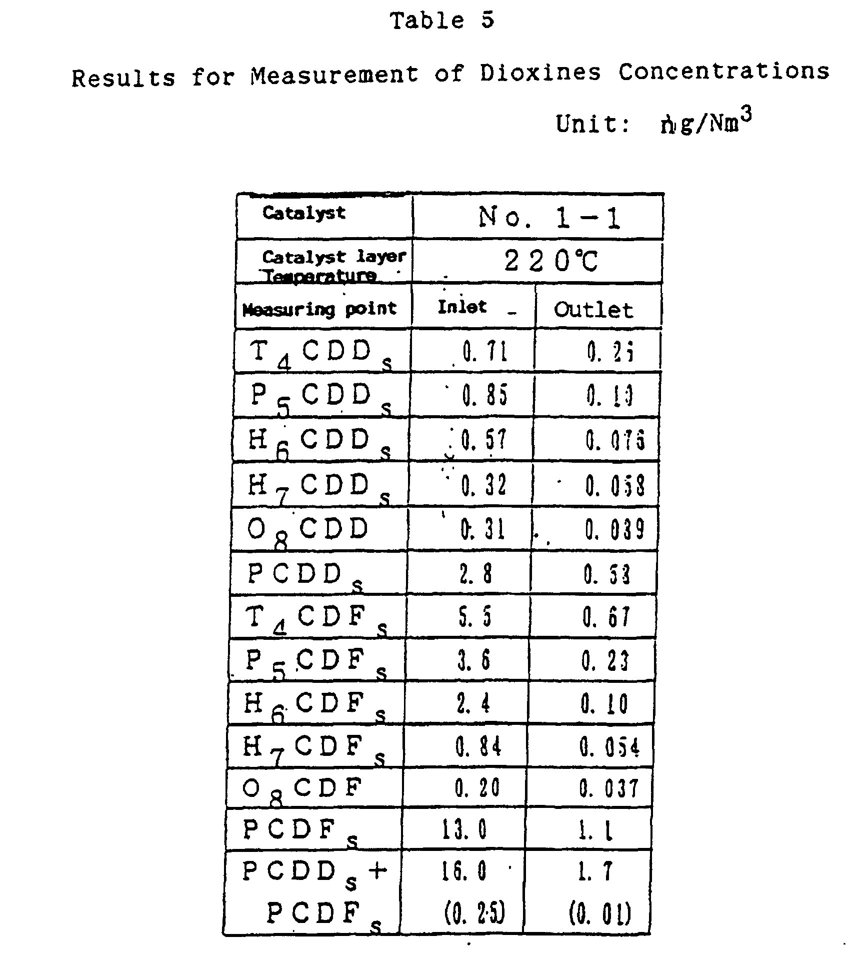

Concentration: O₂ concentration converted as 12%
Numericals shown in () represent international toxicity equivalent concentration

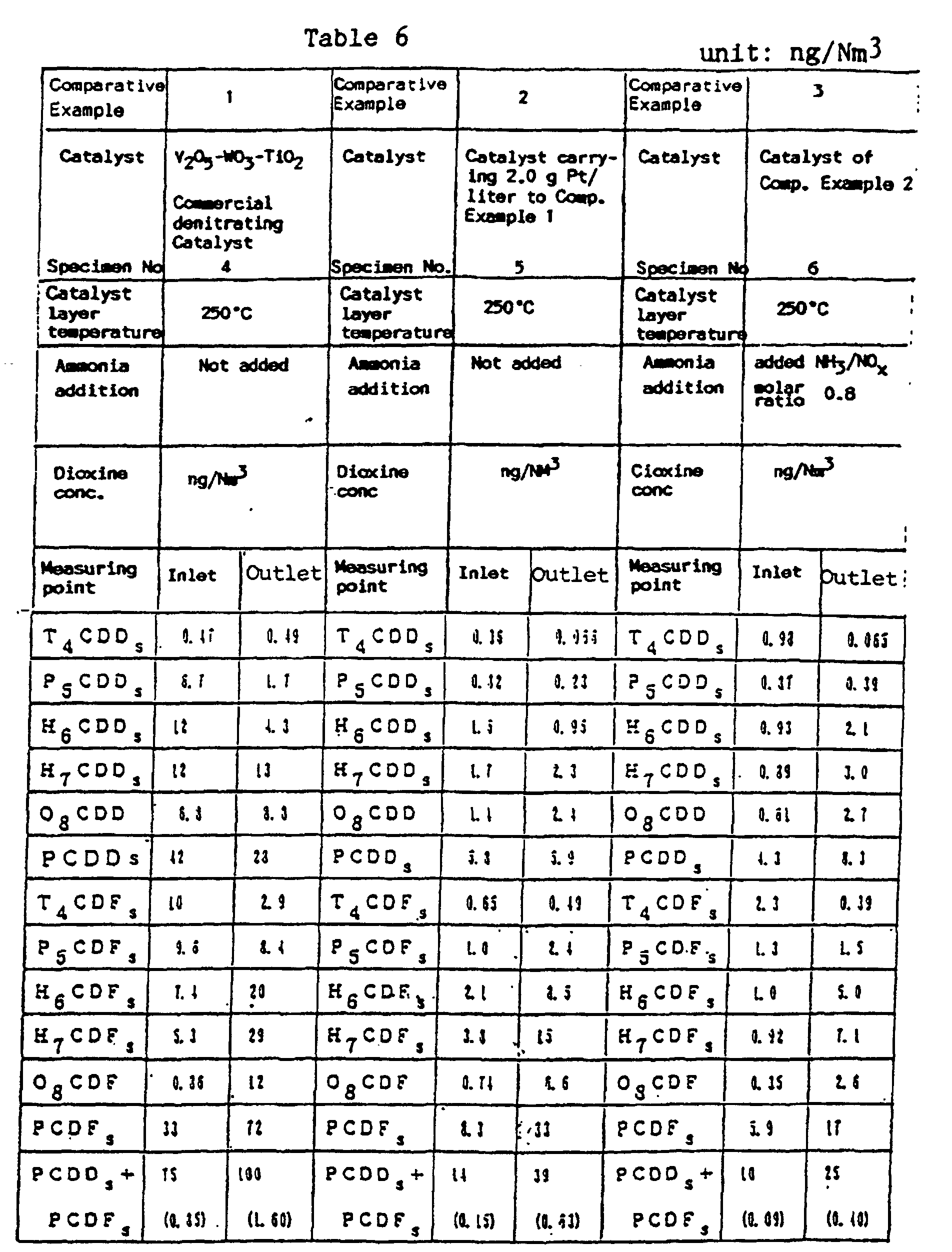

Concentration: O₂ concentration converted as 12%
Numericals shown in () represent international toxicity equivalent concentration

As can be seen from each of the Tables, it is apparent that installation of a catalyst device gives rather undesired effect or less effect in a case where the concentration of dioxines is relatively low, as in exhaust gases from recent entirely connected incineration plants, since the concentration of dioxines is higher in outlet gases than in inlet gases in the prior art. On the other hand, in a case of depositing the catalyst according to the present invention to a commercial cordierite honeycomb structure having 30 cells per one square inch (4.65 cells per cm²), it can suppress formation of dioxines from precursors for dioxines contained without reducing the performance of eliminating dioxines present initially in exhaust gases thereby capable of remarkably reducing the concentration of dioxines in exhaust gases at the outlet of the catalyst layer, and the concentration of dioxines in the outlet gases is reduced for a long time to less than 0.5 ng/Nm³ and to less than 0.1 ng/Nm³ as international aimed value converted as the international toxicity equivalent concentration.

In the present invention, since the predetermined active ingredient is carried by the predetermined amount on the support, polychlorodibenzo para dioxines and polychlorodibenzo furans contained in exhaust gases can be removed effectively, and it can provide a oxidative decomposing catalyst of a long catalyst life which can be used as a catalyst filtration material being deposited on a carrier having an integral structure, for example, a honeycomb structure and on a filter for reducing dioxines present in exhaust gases at a concentration of less than 10 ng/Nm³ (concentration converted as the international toxicity equivalent concentration) at a low temperature of lower than 280°C at a low treating temperature conforming with the guideline of the Ministry of Health and Welfare, to less than 0.5 ng/Nm³, desirably, to less than 0.1 ng/Nm³ (converted as the international toxicity equivalent concentration) aimed value by eliminating the dioxines present initially by oxidative decomposition while suppressing formation of dioxines from precursors by the effect of the catalyst installed, a process for producing the catalyst using a support having an integral structure, and a method of using the catalyst by depositing the catalyst to at least one kind of the support having an integral structure and a filtration material for a bag filter. The present invention can provide remarkable advantageous effects of providing higher elimination ratio as compared with other existent eliminating method, capable of attaining low concentration of dioxines at the outlet, capable of reducing the scale of the reactor, capable of being installed to a newly installed facility, as well as existent facility and capable of reducing the running cost and the installation cost.

The catalyst of the present invention is applicable not only to elimination of chloro dioxines by oxidative decomposition but also to oxidative elimination of polybromodibenzo para dioxines (PBDDs) and polybromobenzo furans (PBDFs) in exhaust gases, which have now brought about problems in recent years, as well as to combustion exhaust gases of polychlorobiphenyl (PCB) and exhaust gases containing organic halogen compounds such as trichloroethylene, trichloroethane, dichloromethane, chlorophenols, halogenated hydrocarbons and methyl bromide, as effective oxidative decomposing catalyst.

## Claims

1. A catalyst for treating exhaust gases containing dioxines in which at least one component selected from the group consisting of Pt, Pd and Ir or oxides thereof as a first catalyst ingredient and at least one component selected from the group consisting of Au, Ag, Cu, Fe, Sb, Se, Te and Ta and oxides thereof as a second catalyst ingredient are supported on at least one component selected from silica-boria-alumina composite oxides and zeolites with a silica-to-alumina molar ratio of more than 30, in amounts of 0.1 to 10 g of the first catalyst ingredient per one litre of the catalyst and 0.01 to 5 g of the second catalyst ingredient per one litre of the catalyst.

2. A catalyst according to claim 1 in which the support ratio by weight of the second catalyst ingredient to the first catalyst ingredient is less than 1.

3. A catalyst according to any preceding claim additionally comprising a carrier substrate.

4. A process for producing a catalyst according to claim 1 and claim 3 which comprises one of
a) spraying or dripping a homogeneous mixed solution or a homogeneous liquid dispersion of raw material for the first catalyst ingredient and the second catalyst ingredient onto powder of at least one component selected from a silica-boria-alumina composite oxide and a zeolite with a silica-to-alumina molar ratio of more than 30 while stirring, thereby supporting the catalyst ingredients, and then slurrying and depositing them on a carrier substrate or
b) slurrying powder of at least one component selected from silica-boria-alumina composite oxides and zeolites with a silica-to-alumina molar ratio of more than 30 coating said slurry on the surface of a carrier substrate, drying and baking to complete deposition, subjecting the coated carrier substrate to immersion, liquid absorption, spraying or ion exchange with a solution of the raw material for the first catalyst ingredient and the second catalyst ingredient successively or simultaneously, and then drying and baking thereby carrying the catalyst ingredient.

5. A method of treating exhaust gases, which comprises bringing exhaust gases containing HCl and containing dioxines at a concentration of less than 10 ng/Nm³, as converted to the international toxicity equivalent concentration, to a treating temperature in the range of from 150°C to 280°C and into contact with a catalyst in which at least one of elements selected from the group consisting of Pt, Pd and Ir and oxides thereof is supported as a catalyst ingredient on at least one component selected from silica-boria-alumina composite oxides and zeolites with a silica-to-alumina molar ratio of more than 30, and deposited on a carrier substrate.

6. A method according to claim 5 wherein the catalyst also comprises at least one component selected from the group consisting of Au, Ag, Cu, Fe, Sb, Se, Te and Ta and oxides thereof as a second catalyst ingredient.

7. A process as defined in claim 4 wherein the carrier substrate for the catalyst
has a honeycomb structure or a three-dimensional network structure and is a support having an integral structure; or
is a filtration material for a bag filter.

8. A process as defined in claim 7 wherein the concentration of the first catalyst ingredient is from 0.1 to 10 g per one litre volume of a complete catalyst, the concentration of the second catalyst ingredient is from 0.01 to 5 g per one litre of the completed catalyst, and the weight ratio of the second catalyst ingredient to the first catalyst ingredient is less than 1.

9. A process as defined in claim 8 in which the carrier substrate is a filtration material for a bag filter.

10. A process as defined in claim 9, wherein the carrying amount of the first catalyst ingredient is from 0.05 to 5% by weight based on the filtration material and the carrying amount of the second catalyst ingredient carried is from 0.01% to 1.0% by weight based on the weight of the carrier substrate, and the weight ratio of the second catalyst ingredient to the first catalyst ingredient is less than 1.

11. A method according to claim 5 or claim 6 wherein the carrier substrate for the catalyst
has a honeycomb structure or a three-dimensional network structure and is a support having an integral structure; or
is a filtration material for a bag filter.

## Patentansprüche

1. Katalysator zur Behandlung von Dioxinen enthaltenden Rauchgasen, bei dem mindestens eine Komponente, die aus der Gruppe ausgewählt wird, die aus Pt, Pd und Ir oder Oxiden davon als erster Katalysatorbestandteil besteht, und mindestens einer Komponente, die aus der Gruppe ausgewählt wird, die aus Au, Ag, Cu, Fe, Sb, Se, Te und Ta und Oxiden davon als zweiter Katalysatorbestandteil besteht, auf mindestens einer Komponente abgestützt werden, die aus Silizium-Bor-Aluminiumverbundoxiden und Zeoliten ausgewählt wird, mit einem Silizium-zu-Aluminiumoxid Molverhältnis von mehr als 30, in Mengen von 0,1 bis 10 g des ersten Katalysatorbestandteils pro 1 Liter des Katalysators, und 0,01 bis 5 g des zweiten Katalysatorbestandteils pro 1 Liter des Katalysators.

2. Katalysator nach Anspruch 1, bei dem Gewichtsabstützverhältnis des zweiten Katalysatorbestandteils zum ersten Katalysatorbestandteil geringer als 1 beträgt.

3. Katalysator nach irgendeinem vorstehenden Anspruch, der zusätzlich ein Trägersubstrat umfaßt.

4. Verfahren zum Herstellen eines Katalysators nach Anspruch 1 und 3, das eine der folgenden Stufen umfaßt:
a) Sprühen oder Tröpfeln einer homogen gemischten Lösung oder einer homogenen flüssigen Dispersion aus Rohmaterial für den ersten Katalysatorbestandteil und den zweiten Katalysatorbestandteil auf Pulver mindestens einer Komponente, die aus einem Silizium-Bor-Aluminium-Verbundoxid und einem Zeolit ausgewählt ist mit einem Silizium-zu-Aluminiumoxid Molverhältnis von größer als 30, während gerührt wird, wodurch die Katalysatorbestandteile unterstützt werden und ihre anschließende Aufschlämmung und Ablagerung auf einem Trägersubstrat oder
b) Aufschlämmen von Pulver mindestens einer Komponente, die aus Silizium-Bor-Aluminium-Verbundoxiden und Zeoliten ausgewählt ist mit einem Silizium-zu-Aluminiumoxid Molverhältnis von mehr als 30, Überziehen dieser Schlämmung auf der Oberfläche eines Trägersubstrats, Trocknung und Backen bis zur vollständigen Ablagerung, Unterwerfen des überzogenen Trägersubstrats einer Einbettung, flüssigen Absorbtion, Sprühen oder Ionenaustausch mit einer Lösung des Rohmaterials für den ersten Katalysatorbestandteil und den zweiten Katalysatorbestandteil anschließend oder gleichzeitig, und danach Trocknung und Ausbacken, so daß es den Katalysatorbestandteil trägt.

5. Verfahren zum Behandeln von Rauchgasen, das die HCl und Dioxine enthaltenden Rauchgase bei einer Konzentration geringer als 10 ng/Nm³, umgerechnet auf die internationale äquivalente Toxizitätskonzentration, auf eine Behandlungstemperatur im Bereich von 150°C bis 280°C und in Kontakt mit einem Katalysator bringt, bei dem mindestens einer der Elemente aus der Gruppe ausgewählt wird, die aus Pt, Pd und Ir und deren Oxiden besteht und als Katalysatorbestandteil gestützt wird, auf mindestens eine Komponente, die aus Silizium-Bor-Aluminium Verbundoxiden und Zeoliten ausgewählt wird, mit einem Silizium-zu-Aluminiumoxid Molverhältnis von mehr als 30 und Ablagern auf einem Trägersubstrat.

6. Verfahren nach Anspruch 5, bei dem der Katalysator mindestens eine Komponente ferner umfaßt, die aus der Gruppe ausgewählt wird, die aus Au, Ag, Cu, Fe, Sb, Se, Te und Ta und deren Oxiden als ein zweiter Katalysatorbestandteil besteht.

7. Verfahren nach Anspruch 4, bei den das Trägersubstrat für den Katalysator eine Bienenwabenstruktur oder eine dreidimensionale Netzwerkstruktur besitzt, und eine Abstützung darstellt, die einen integralen Aufbau besitzt, oder ein Filtermaterial für einen Beutelfilter darstellt.

8. Verfahren nach Anspruch 7, bei dem die Konzentration des ersten Katalysatorbestandteils 0,1 bis 10 g pro 1 Liter Volumen des vollständigen Katalysators beträgt, und wobei die Konzentration des zweiten Katalysatorbestandteils 0,01 bis 5 g pro 1 Liter des vollständigen Katalysators beträgt, und wobei das Gewichtsverhältnis des zweiten Katalysatorbestandteils zum ersten Katalysatorbestandteil geringer als 1 beträgt.

9. Verfahren nach Anspruch 8, bei dem das Trägersubstrat ein Filtrationsmaterial für einen Beutelfilter ist.

10. Verfahren nach Anspruch 9, bei dem die tragende Menge des ersten Katalysatorbestandteils 0,05 bis 5 Gew.-% beträgt, basierend auf dem Filtrationsmaterial, und wobei die tragende Menge des zweiten Katalysatorbestandteils von 0,01 % bis 1.0 Gew.-%, basierend auf dem Gewicht des Trägersubstrats beträgt, und wobei das Gewichtsverhältnis des zweiten Katalysatorbestandteils zum ersten Katalysatorbestandteil geringer als 1 beträgt.

11. Verfahren nach Anspruch 5 oder Anspruch 6, bei denen das Trägersubstrat für den Katalysator eine bienenwabenförmige Struktur oder eine dreidimensionale Netzwerkstruktur besitzt und eine Stütze bildet, die einen integralen Aufbau besitzt oder
ein Filtrationsmaterial für einen Beutelfilter darstellt.

## Revendications

1. Catalyseur pour le traitement de gaz d'échappement contenant des dioxines, dans lequel au moins un constituant choisi dans le groupe consistant en Pt, Pd et Ir ou leurs oxydes comme premier ingrédient de catalyseur et au moins un constituant choisi dans le groupe consistant en Au, Ag, Cu, Fe, Sb, Se, Te et Ta et leurs oxydes comme second ingrédient de catalyseur sont fixés sur un support formé d'au moins un constituant choisi entre des oxydes composites silice-oxyde de bore-alumine et des zéolites ayant un rapport molaire de la silice à l'alumine supérieur à 30, en des quantités de 0,1 à 10 g du premier ingrédient de catalyseur par litre de catalyseur et de 0,01 à 5 g du second ingrédient de catalyseur par litre de catalyseur.

2. Catalyseur suivant la revendication 1, dans lequel le rapport, sur le support, en poids du second ingrédient de catalyseur au premier ingrédient de catalyseur est inférieur à 1.

3. Catalyseur suivant l'une quelconque des revendications précédentes, comprenant en outre un substrat de support.

4. Procédé pour la production d'un catalyseur suivant la revendication 1 et la revendication 3, qui comprend l'une des opérations suivantes
a) pulvérisation ou écoulement d'une solution mixte homogène ou d'une dispersion liquide homogène de matière première pour le premier ingrédient de catalyseur et le second ingrédient de catalyseur sur une poudre d'au moins un constituant choisi entre un oxyde composite silice-oxyde de bore-alumine et une zéolite ayant un rapport molaire de la silice à l'alumine supérieur à 30 sous agitation, en fixant ainsi les ingrédients de catalyseur sur un support, puis leur mise en suspension et leur dépôt sur un substrat de support ; ou
b) mise en suspension d'une poudre d'au moins un constituant choisi entre des oxydes composites silice-oxyde de bore-alumine et des zéolites ayant un rapport molaire de la silice à l'alumine supérieur à 30, application de ladite suspension sous forme d'un revêtement sur la surface d'un substrat de support, séchage et cuisson au four pour achever le dépôt, étape consistant à soumettre le substrat de support revêtu à une immersion, une absorption de liquide, une pulvérisation ou un échange d'ions avec une solution de la matière première pour le premier ingrédient de catalyseur et le second ingrédient de catalyseur successivement ou simultanément, ensuite séchage et cuisson au four, en fixant ainsi l'ingrédient de catalyseur sur le support.

5. Procédé pour le traitement de gaz d'échappement, qui comprend l'étape consistant à mettre des gaz d'échappement contenant HCl et contenant des dioxines en une concentration inférieure à 10 ng/Nm³, suivant la conversion en concentration équivalente de toxicité internationale, à une température de traitement comprise dans l'intervalle de 150°C à 280°C et en contact avec un catalyseur dans lequel au moins un des éléments choisis dans le groupe consistant en Pt, Pd et Ir et leurs oxydes est fixé, comme ingrédient de catalyseur, sur un support consistant en au moins un constituant choisi entre des oxydes composites silice-oxyde de bore-alumine et des zéolites ayant un rapport molaire de la silice à l'alumine supérieur à 30, et déposé sur un substrat de support.

6. Procédé suivant la revendication 5, dans lequel le catalyseur comprend également au moins un constituant choisi dans le groupe consistant en Au, Ag, Cu, Fe, Sb, Se, Te et Ta et leurs oxydes comme second ingrédient de catalyseur.

7. Procédé répondant à la définition suivant la revendication 4, dans lequel le substrat de support pour le catalyseur
a une structure en nid d'abeilles ou une structure de réseau tridimensionnel et est un support ayant une structure monobloc ; ou
est un matériau de filtration pour un filtre à manche.

8. Procédé selon la revendication 7, dans lequel la concentration du premier ingrédient de catalyseur est de 0,1 à 10 g par litre volumique d'un catalyseur complet, la concentration du second ingrédient de catalyseur est de 0,01 à 5 g par litre du catalyseur complet, et le rapport en poids du second ingrédient de catalyseur au premier ingrédient de catalyseur est inférieur à 1.

9. Procédé selon la revendication 8, dans lequel le substrat de support est un matériau de filtration pour un filtre à manche.

10. Procédé répondant à la définition suivant la revendication 9, dans lequel la quantité de support du premier ingrédient de catalyseur est comprise dans l'intervalle de 0,05 à 5 % en poids sur la base du matériau de filtration et la quantité de support du second ingrédient de catalyseur fixé est comprise dans l'intervalle de 0,01 % à 1,0 % en poids sur la base du poids du substrat de support, le rapport pondéral du second ingrédient de catalyseur au premier ingrédient de catalyseur étant inférieur à 1.

11. Procédé suivant la revendication 5 ou la revendication 6, dans lequel le substrat de support pour le catalyseur
a une structure en nid d'abeilles ou une structure de réseau tridimensionnel et est un support ayant une structure monobloc ; ou
est un matériau de filtration pour un filtre à manche.
